# EUROPÄISCHE PATENTSCHRIFT

(11) **EP 1 628 856 B1**
(45) Veröffentlichungstag und Bekanntmachung des Hinweises auf die Patenterteilung: **15.11.2006**
(21) Anmeldenummer: 04729086.1
(22) Anmeldetag: 23.04.2004
(51) Int. Cl.: B60R 16/02, B65H 37/00

(54) **VERFAHREN ZUM VERKLEBEN VON FLACHBANDKABELN AUF UNTERGRÜNDEN WIE DIE INNENRAUM-DEKORTEILE EINES PKWS, INSBESONDERE DACHHIMMEL, TÜRSEITENTEIL, KOFFERRAUMDECKEL**
METHOD FOR ADHERING RIBBON CABLES TO BASES SUCH AS THE INTERIOR LINING OF A MOTOR VEHICLE, ESPECIALLY THE ROOF, SIDE OF THE DOOR, AND LID OF THE BOOT
PROCEDE DE COLLAGE DE CABLES PLATS SUR DES SUPPORTS TELS QUE LES GARNITURES INTERIEURES D'UN VEHICULE, NOTAMMENT LE PLAFOND, LES CONTRE-PORTES ET LE HAYON

(30) Priorität: 23.05.2003 DE 10323801; 01.08.2003 DE 10335238
(43) Veröffentlichungstag der Anmeldung: 01.03.2006
(73) Patentinhaber: tesa AG, 20253 Hamburg (DE)
(72) Erfinder: VON SAMSON-HIMMELSTJERNA, Matthias, 24558 Henstedt-Ulzburg (DE)
(74) Vertreter: Stubbe, Andreas
(86) Internationale Anmeldenummer: PCT/EP2004/004302
(87) Internationale Veröffentlichungsnummer: WO 2004/103776

(56) Entgegenhaltungen:
- EP-A- 0 534 659
- EP-A- 1 233 046
- DE-A- 4 220 792
- DE-U- 29 715 692
- FR-A- 2 657 074
- GB-A- 2 275 373
- PATENT ABSTRACTS OF JAPAN Bd. 2002, Nr. 02, 2. April 2002 (2002-04-02) -& JP 2001 277851 A (FUJIKURA LTD), 10. Oktober 2001 (2001-10-10)

## Beschreibung

Die Erfindung betrifft ein Verfahren zum Verkleben von Flachbandkabeln auf Untergründen wie die Innenraum-Dekorteile eines PKWs, insbesondere Dachhimmel, Türseitenteil, Kofferraumdeckel.

Teile, die durch ein doppelseitiges Klebeband befestigt werden sollen (zum Beispiel Flachbandkabel, Displays, Kartonagen) werden sehr oft vorab komplett selbstklebend ausgerüstet. Dies ist mit sehr viel Materialverbrauch verbunden, und sowohl die kantengleiche Ausrüstung von Teilen mit einem Klebeband, als auch das notwendige Abziehen der Klebebandabdeckung später bei der Montage sind sehr zeitintensiv.

Eine Alternative besteht im Aufbringen von einzelnen Klebepunkten direkt bei der Montage, um dann anschließend das Teil darauf zu verkleben. Auch diese Arbeit ist umständlich, da die Klebepunkte wiederum mit einer Abdeckung ausgerüstet sind, welche vorab entfernt werden muss.

Gewisse Teile (zum Beispiel elektronische Bauteile oder Dichtungen in Mobilfunktelefonen) erzwingen je nach Anwendungsfall den Einsatz doppelseitig klebender Stanzteile. Bei diesen Stanzteilen handelt es sich um einzelne Klebebandabschnitte, die entweder unmittelbar hintereinander auf einer Trägerbahn angeordnet sind oder die sich mit vorgegebenen Abstand, der regelmäßig oder unregelmäßig sein kann, auf der Trägerbahn befinden.

Diese Stanzteile müssen vorab in einem Stanzprozess, insbesondere im sogenannten kiss cut-Prozess, in die erforderliche Form konfektioniert werden, wobei zuvor das zur Herstellung der Stanzteile klebend ausgerüstete Band mit einem antiadhäsiv ausgerüsteten Material abgedeckt werden muss.

Das kiss-cut-Verfahren ist dadurch ausgezeichnet, dass beim Stanzen das antiadhäsiv ausgerüstete Material nicht oder nur unwesentlich verletzt beziehungsweise angestanzt wird.
Auf diese Weise wird vermieden, dass nach dem Stanzen Kleber der Stanzteile in die Einschnitte fließt und mit dem Material verklebt. Sollte dies geschehen, könnte in nachfolgenden Produktionsschritten, in denen das Material mit den Stanzteilen weiterverarbeitet werden soll, das Material spalten. Damit wäre die gesamte Rolle von der Weiterverarbeitung ausgeschlossen und somit Abfall.

Weitere Anwendungen derartiger doppelseitig klebender Stanzteile sind im Automobilsektor zu finden. Beispielsweise sei die Verklebung von Flachkabeln in PKW-Dachhimmeln hervorzuheben.

Folienkabelsysteme sind im Gegensatz zu konventionellen Kabelsätzen dünn, gewichts- und raumsparend, sehr biegsam und schlecht manuell handhabbar, so dass die Montage derselben auf einem PKW-Innenraumteil manuell sehr aufwendig und zeitraubend ist.

Bisher werden diese befestigt, indem in einem ersten Produktionsschritt doppelseitige Klebebänder mit Trennpapier einseitig auf FFC-Kabelsysteme beim Kabelsatzhersteller aufgebracht werden.
In einem zeitlich versetzten zweiten Schritt, meist beim Autohersteller an der Montagelinie, wird der FFC-Kabelsatz auf das Dekorteil aufgebracht in der Weise, dass manuell das Trennpapier entfernt werden muss, bevor das Kabelsystem auf die Endposition des Dachhimmels positioniert wird.

Dieser Prozess ist sehr zeitaufwendig und hat darüber hinaus den Nachteil, dass er dem Wunsch vieler Automobilkomponentenhersteller nach mehr Automatisierung nicht folgt.

Manuelle Arbeit ist weiterhin erforderlich mit den Risiken der schwankenden Qualitätsniveaus.

Aufgabe der Erfindung ist es, ein Verfahren zur Verfügung zu stellen, das bei einem sehr einfachen Aufbau Flachbandkabel sehr effizient und präzise mit hoher Lagepräzision auf beispielsweise ein PKW-Teil aufbringt, und zwar unter Verwendung einer Trägermaterialbahn mit beidseitig klebend ausgerüsteten Klebebandabschnitten beziehungsweise Stanzteilen.

Gelöst wird diese Aufgabe durch ein Verfahren, wie es im Hauptanspruch dargelegt ist. Weiterbildungen der erfindungsgemäßen Verfahren sind dabei Gegenstand der Unteransprüche.

Demgemäß besteht das Verfahren zum Verkleben von Flachbandkabeln auf Untergründen wie die Innenraum-Dekorteile eines PKWs, insbesondere Dachhimmel, Türseitenteil, Kofferraumdeckel, indem
- das Flachbandkabel in eine Halterung eingelegt wird, mit der das Flachbandkabel vorübergehend fixiert ist,
- auf die Flachbandkabel beidseitig klebend ausgerüstete Klebebandabschnitte aufgebracht werden,
- zwischen dem mit den beidseitig klebend ausgerüsteten Klebebandabschnitten versehenen Flachbandkabel sowie dem Untergrund eine Relativbewegung aufeinander zu stattfindet,
- die beidseitig klebend ausgerüsteten Klebebandabschnitte das Flachbandkabel mit dem Untergrund verkleben, so dass sich bei einer Entfernung der Halterung vom Untergrund das Flachbandkabel aus der Halterung löst.

Die Relativbewegung kann dabei derart sein, dass die Halterung mit dem Flachbandkabel auf den Untergrund zubewegt wird beziehungsweise umgekehrt.
Weiterhin können sich die Halterung und das Flachbandkabel gleichzeitig aufeinander zu bewegen.

Die Klebkraft der Klebebandabschnitte ist größer als die Kraft, die das Flachbandkabel in der Halterung hält, so dass das Flachbandkabel aus der Halterung springt, sobald sich Untergrund und Halterung nach Pressvorgang voneinander entfernen.

In einer vorteilhaften Ausführungsform erfolgt das Verkleben der beidseitig klebend ausgerüsteten Klebebandabschnitte auf dem Flachbandkabel mittels einer Vorrichtung zum Abrollen von einer auf einer Rolle befindlichen Trägermaterialbahn mit den beidseitig klebend ausgerüsteten Klebebandabschnitten aus
- einem Griffstück, das an einer Halteplatte angebracht ist,
- einer auf der Halteplatte drehbar gelagerten Aufnahme für die Rolle Trägermaterialbahn,
- einer auf der Halteplatte drehbar gelagerten Andruckrolle, die während des Spendevorganges die Trägermaterialbahn mit den Klebebandabschnitten mit dem Untergrund in Kontakt bringt und über die die Trägermaterialbahn mit den Klebebandabschnitten von der Aufnahme für die Rolle derart geführt wird, dass die Klebebandabschnitte während des Spendevorganges von der Trägermaterialbahn auf den Untergrund verspendet werden,
- einer auf der Halteplatte drehbar gelagerten Antriebsrolle, über die die Trägermaterialbahn mit den Klebebandabschnitten derart geführt wird, dass die Antriebsrolle synchron zur Geschwindigkeit der Trägermaterialbahn rotiert,
- einer auf der Halteplatte drehbar gelagerten Aufnahmerolle, die die Trägermaterialbahn nach dem Verspenden der Klebebandabschnitte aufnimmt und die insbesondere über einen Riemen durch die Bewegung der Antriebsrolle in Rotation versetzt wird.

In einer weiteren bevorzugten Ausführungsform ist die Antriebsrolle zwischen der Aufnahme für die Rolle Trägermaterialbahn und der Andruckrolle angeordnet.

In einer weiteren bevorzugten Ausführungsform ist eine Führungsrolle zwischen der Aufnahme für die Rolle Trägermaterialbahn und der Antriebsrolle angeordnet, um einen sehr hohen Umschlingungswinkel der Trägermaterialbahn um die Antriebsrolle herzustellen.

Auf diese Weise ist eine sichere Übertragung der Bewegung der Trägermaterialbahn auf die Antriebsrolle und somit über den bevorzugten Riemen auf die Aufnahmerolle gewährleistet.

Weiter vorzugsweise befindet sich auf einer auf dem Griffstück fixierbare Achse eine einstellbare Positionierhilfe, insbesondere in Form einer festschraubbaren, rotationsfähigen Welle, über die die Trägermaterialbahn von der Aufnahme für die Rolle Trägermaterialbahn in Richtung Antriebsrolle geführt wird.

Diese Positionierhilfe, insbesondere bestehend aus einer in einer Nut beweglich zu führenden Welle, die innerhalb der Nut an jeder beliebigen Position festgeschraubt werden kann, dient dazu, je nach Anwendungsfall der Klebebandabschnitte sicherzustellen, dass der Anfang und/oder das Ende der insbesondere beidseitig selbstklebenden Klebebandabschnitte immer an vorgegebener Stelle liegt, damit die Verklebung immer definiert am Anfang eines zum Beispiel 15 mm langen Klebebandabschnittes beginnt und nach dem Spendevorgang, also wenn beispielsweise die Vorrichtung einmal über einen Abschnitt des Flachbandkabels gezogen worden ist, am Ende eines anderen zum Beispiel 15 mm langen Klebebandabschnittes aufhört.

Eine andere beispielhafte Lösung für eine derartige Positionierhilfe kann eine zusätzliche kleine in gleicher Weise positionierbare Lupe mit Markierung sein.

Der Abstand Andruckrolle und Positionierhilfe ist individuell einstellbar, angepasst an die Länge der beidseitig selbstklebenden Klebebandabschnitte.
Dem Anwender der Vorrichtung gelingt es durch diese Positionierungshilfe immer innerhalb des durch die Länge der Klebebandabschnitte vorgegeben Rapports zu bleiben.

Um sowohl Links- als auch Rechtshändern den einfachen Gebrauch der Vorrichtung zu ermöglichen können das Griffstück sowie alle anderen Bauelemente spiegelverkehrt auf der Halteplatte montiert werden.

In der Aufnahme für die Rolle Trägermaterialbahn ist einer weiteren bevorzugten Ausführungsvariante eine einstellbare Bremse, insbesondere Friktionsbremse vorhanden. Diese sorgt für eine gleichmäßige, nicht zu geringe Spannung in der Trägermaterialbahn während des Spendevorganges.

In einer weiteren bevorzugten Ausführungsform ist die Andruckrolle mit der einen Seite auf der Halteplatte fixiert und trägt auf der anderen Seite eine Gegenplatte. Die Gegenplatte und die Halteplatte sind bei der Vorrichtung, die während des Spendevorganges geschoben wird, in Richtung des Handgriffes verlängert ausgeführt. Die Gegenplatte und die Halteplatte sind in ihrer Form mit der Andruckrolle und dem Hebelarm des Handgriff derart abgestimmt, dass am Ende des Spendevorgang die gesamte Vorrichtung vom Verwender um den sich aus dieser Geometrie ergebenden Drehpunkt leicht gekippt werden kann. Durch diese Drehbewegung gelingt es in Verbindung mit der Positionierhilfe immer, einerseits den letzten Klebebandabschnitt noch sicher zu spenden, das heißt von der Trägermaterialbahn auf den Untergrund zu übertragen, andererseits wird der folgende, erst später zu verklebende Klebebandabschnitt noch sicher auf der Trägermaterialbahn festgehalten.

Als Materialien für die Bauteile eignen sich Kunststoffe, aber auch eine Metallausführung ist möglich.

Die Vorrichtung zum Abrollen kann anstelle durch eine manuelle Bewegung in einer weiteren Ausführung auch durch einen üblichen Handhabungsautomaten bewegt werden. Dabei ist neben einer üblichen optisch/elektrischen Positionierhilfe vorzugsweise eine mechanische/elektrische Positionierhilfe wie folgt einzusetzen.
Die drehbare in der Nut einstellbare Welle besitzt eine zusätzliche mit ihr mechanisch verbundene Welle, zum Beispiel in Form eines Zahnrades, welche in einen nicht durch die Klebebandabschnitte abgedeckten freien Kantenbereich der Trägermaterialbahn einsticht. Dadurch kann der einmalig manuell eingestellte Rapport, das heißt der genaue Abstand zwischen Positionierhilfe und Andruckrolle, nicht mehr verlassen werden. Ein auf der Welle des Zahnrades mechanisch befestigter üblicher Drehgeber wird dann zur Ansteuerung des Handhabungsautomaten, das heißt zur Auslösung von Beginn und Ende der zum Spendevorgang notwendigen Bewegung, verwendet.

Vorzugsweise wird demgemäss die Vorrichtung von einem Roboter geführt, so dass Klebebandabschnitte an exakt vorgegebenen Stellen auf dem Flachbandkabel aufgebracht werden.

Weiter vorteilhaft ist die Halterung des Folienkabels in Form einer Rinne ausgeführt, deren Seitenwände die Kanten des Flachbandkabels klammerartig umgreifen, so dass das Flachbandkabel mechanisch in der Rinne fixiert ist. Die Rinne dient als Haltevorrichtung, in die das Folienkabel vorübergehend eingelegt und lagerichtig gehalten werden kann, bestehend aus einer Schiene, die der Breite des Folienkabels entspricht. Um die Folienkabel in ihrer Lage - auch über Kopf halten zu können, sind diese an den Seiten vorzugsweise mit einer durch ein Klebeband, vorzugsweise ein doppelseitiges Klebeband, ausgerüsteten Fläche ausgestattet (beispielsweise ein Antirutschband wie tesa ® 4863), welche ein Herausrutschen des Folienklebebandes aus der Rinne während des Einschwenkens über die definitive Befestigungsstelle am PKW-Teil verhindert. Die Rinne (Montagegitterwerk) ist vorzugsweise weiterhin an seiner Basisfläche mit einer durch Klebeband beschichteten Antirutsch-Beschichtung ausgestattet, so dass während der Klebeband - Ausrüstung des Folienkabels durch Pistole dasselbe nicht auf der Rinne in Längsrichtung bewegt werden kann.
Die Höhe der Seitenwände der Rinne entspricht dabei vorzugsweise in etwa der Summe aus der Dicke des Flachbandkabels, die üblicherweise zwischen 0,5 und 1 mm liegt, und der Klebebandabschnitte.

Die Vorrichtung ist zum Aufbringen einer Vielzahl von auf einer Rolle befindlichem Trägermaterial, auf dem selbstklebend ausgerüstete Klebebandabschnitte beziehungsweise Stanzformteile vorhanden sind, geeignet.

Diese Stanzformteile werden in einem Konfektionierprozess hergestellt, in dem auf das Trägermaterial ein doppelseitig klebend ausgerüstetes Band aufgelegt wird, aus dem insbesondere im kiss cut-Prozess Stanzformteile ausgestanzt werden.

Vorzugsweise handelt es sich um eine Trägermaterialbahn, auf der beidseitig selbstklebend ausgerüstete Klebebandabschnitte angeordnet sind, wobei auf die Trägermaterialbahn beidseitig eine antiadhäsive Beschichtung aufgebracht ist und wobei sich die beiden antiadhäsiven Beschichtungen im Abweisungsgrad zur Klebemasse der Klebebandabschnitte unterscheiden.

In einer vorteilhaften Ausführungsform weist die antiadhäsive Beschichtung, die sich auf der oberen Seite der Trägermaterialbahn befindet, einen niedrigeren Abweisungsgrad auf als die antiadhäsive Beschichtung, die sich auf der unteren Seite der Trägermaterial befindet.
Die Klebebandabschnitte liegen dabei bei abgerollter Trägermaterialbahn auf der Oberseite derselben.
Auf diese Weise ist nämlich gewährleistet, dass
- die einzelnen Klebebandabschnitte auf der Trägermaterialbahn in Form einer Rolle ohne weitere Hilfsmittel (zum Beispiel einer zweiten Abdeckung) konfektioniert und dargereicht werden können; beim Konfektioniervorgang (Zuschnitt der Klebebandabschnitte) kann das überflüssige Material als Gitternetz abgezogen und verworfen werden und
- die Klebebandabschnitte durch die erfindungsgemäße Vorrichtung einfach gespendet werden können.

Als Trägermaterialbahn werden vorzugsweise Papier, ein Papier-Polyolefin-Verbund und/oder eine Folie eingesetzt.
Als Trägermaterial sind weiterhin prinzipiell Folien wie zum Beispiel BOPP oder MOPP, PET, PVC oder Vliese (auf Basis Cellulose oder Polymere) geeignet. Weiterhin kommen auch Schäume (zum Beispiel PUR, PE, PE/EVA, EPDM, PP, PE, Silikon, usw.) oder Trennpapiere (Kraft Papiere, polyolefinisch beschichtete Papiere) oder Trennfolien (PET, PP oder PE oder Kombinationen aus diesen Materialien) als Beschichtungssubstrate in Frage.

Als antiadhäsive Beschichtung wird vorzugsweise ein lösemittelfrei beschichtetes Silikon eingesetzt.
Weiter vorzugsweise wird die antiadhäsive Beschichtung und/oder das lösemittelfrei beschichtete Silikon mit 0,8 bis 3,7 g/m², bevorzugt 1,3 bis 3,2 g/m², ganz besonders bevorzugt 1,8 bis 2,8 g/m², aufgetragen.

Aber auch lösemittelhaltige Systeme als antiadhäsive Beschichtung sind möglich, und zwar mit einer Auftragsmenge von insbesondere 0,3 bis 1 g/m².

Als Träger für die Klebebandabschnitte werden weiterhin vorzugsweise bahnförmige Materialien wie Papier, Vliese, Kunststofffolien und Schaumstoffe eingesetzt.
Prinzipiell sind alle Arten von doppelseitig beschichteten Klebebändern als Basismaterial für die Klebebandabschnitte geeignet.
Als Klebemassen für die Klebebänder können alle Haftklebemassen, wie sie zum Beispiel im SATAS, Handbook of Pressure Sensitive Adhesive Technology, Third Edition, erwähnt sind, eingesetzt werden. Insbesondere eignen sich Natur-/Synthesekautschuk- und acrylatbasierende Klebemassen, die aus der Schmelze oder Lösung aufgetragen werden können.

Erfindungsgemäß können des weiteren als Trägermaterial hochverdichtete Glassine-Papiere, eingesetzt werden, die auf der oberen und/oder auf der unteren Seite mit einer Kunststoffbeschichtung versehen sind, wobei zumindest auf einer der gegebenenfalls vorhandenen zwei Kunststoffbeschichtungen eine antiadhäsive Schicht aufgetragen ist, insbesondere eine Silikonbeschichtung.

In einer weiteren Ausführungsform der Erfindung wird ein Papierträger mit einer Dichte von 1,1 bis 1,25 g/cm³ als Trägermaterial eingesetzt, wobei der Papierträger im wesentlichen eine obere und eine untere Seite aufweist.
Der Papierträger ist auf der oberen und/oder auf der unteren Seite mit einer Kunststoffbeschichtung versehen, wobei zumindest auf einer der gegebenenfalls vorhandenen zwei Kunststoffbeschichtungen eine antiadhäsive Schicht aufgetragen ist.

Vorzugsweise weist der Papierträger beziehungsweise das Glassine-Papier eine Dichte auf von 1,12 bis 1,2 g/cm³, insbesondere 1,14 bis 1,16 g/cm³.
Weiter vorzugsweise weist der Papierträger beziehungsweise das Glassine-Papier ein Flächengewicht von 40 bis 120 g/m², bevorzugt 50 bis 110 g/m², ganz besonders bevorzugt 60 bis 100 g/m², auf.

Als Kunststoffbeschichtung werden insbesondere Polyolefine wie LDPE, HDPE, Mischungen der beiden zuvor genannten, zum Beispiel MDPE, PP oder PET verwendet. Ganz besonders vorteilhaft ist LDPE.

Die polybeschichteten Seiten des Papierträgers aus LDPE oder HDPE sind darüber hinaus matt oder glänzend herstellbar.

Weiter vorzugsweise wird die Kunststoffbeschichtung mit 5 bis 30 g/m², bevorzugt 10 bis 25 g/m², ganz besonders bevorzugt 15 bis 20 g/m², aufgetragen.
Insbesondere bei Polyester kann der Auftrag auch bereits bei 2 bis 3 g/m² erfolgen.

Darüber hinaus stellt eine hervorragende Ausbildung der Erfindung die Tatsache dar, wenn als antiadhäsive Schichten zum Beispiel Silikon, Paraffin, Teflon oder Wachse verwendet werden. Dann können silikonfreie Trennschichten, zum Beispiel "non Silicone" von der Firma Rexam, oder silikonarme Trennschichten, zum Beispiel "Lo ex" von der Firma Rexam, eingesetzt werden.

Je nach Anwendungsfall des Papierträgermaterials ist es möglich, die antiadhäsiven Schichten auf beiden Seiten des Trägermaterials gleich oder unterschiedlich trennend auszugestalten, also auch auf beiden Seiten voneinander verschiedene Trenneigenschaften einzustellen (controlled release).

Auf diese Weise ist gewährleistet, dass das Abdeckmaterial bei beidseitiger Polybeschichtung
- dimensionsstabile Eigenschaften (gute Planlage)
- eine geringe Dicke mit hoher Dickenkonstanz (enge Toleranzen, präzisere Stanzschnitte)
- und eine Schutzschicht gegen Anstanzungen des Papierkörpers
   aufweist oder dass das Abdeckmaterial bei einseitiger Polybeschichtung
- eine geringe Dicke mit hoher Dickenkonstanz (enge Toleranzen, präzisere Stanzschnitte) und
- eine Schutzschicht gegen Anstanzungen des Papierkörpers
aufweist.

Für die Verwendung in der Vorrichtung ist es besonders zweckmäßig, wenn die einzelnen Klebebandabschnitte in Form von Rechtecken auf der Trägermaterialbahn angeordnet sind. Des weiteren ist es sehr vorteilhaft, wenn diese Rechtecke auf der Trägermaterialbahn ohne Abstand zwischen den einzelnen Klebebandabschnitten angeordnet sind.

Die Herstellung derartiger Klebebandabschnitte auf einer Trägermaterialbahn ohne Abstand ist wegen des Zusammenfließens der Klebemasse oft sehr schwierig.
Weiterhin vorzugsweise lässt sich daher eine Trägermaterialbahn verwenden, auf der Stanzlinge angeordnet sind, die aus einer Haftklebemasse bestehen, welche anisotrope Eigenschaften besitzt.

Während der Herstellung, der Weiterverarbeitung oder der späteren Beanspruchung von Polymeren beziehungsweise von Polymermassen kann es zur Ausbildung hoher Orientierungsgrade der Makromoleküle in bevorzugte Richtungen im gesamten Polymerverband kommen; durch diese Orientierung, die auch gezielt herbeigeführt werden kann, lassen sich die Eigenschaften der entsprechenden Polymere steuern und in Hinblick auf gewünschte Verwendungen verbessern. Anisotrop orientierte Haftklebemassen besitzen die Tendenz, sich nach einer Streckung in eine vorgegebene Richtung durch das "entropieelastische Verhalten" in den Ausgangszustand zurückzubewegen.
Für die Verwendung sind prinzipiell alle Haftklebemassen geeignet, die eine Orientierung aufweisen, beispielsweise solche auf Basis von Natur- und Synthesekautschuken wie Butylkautschuk, Neopren, Butadien-Acrylnitril, Styrol-Butadien-Styrol- und Styrol-Isopren-Styrol-Copolymerisaten, ferner auf Basis von linearen Polyestern und Copolyestren, Polyurethanen, Polysiloxanelastomeren, auf Basis von Reinacrylaten, ganz besonders aber anisotrope Haftklebemassen auf Polyacrylatbasis.
Solche anisotrop orientierten Acrylathaftklebemasssen zeigen als Schicht nach Stanz- und/oder Schneidvorgängen eine Rückstellung der Haftklebeschicht an der Schneid- und Stanzkante, welche für das Ausstanzen nicht wieder zusammenfließender Stanzformen genutzt wird.

Eine vorteilhafte Weiterentwicklung verwendet eine Haftklebemasse,
- welche durch eine radikalische Polymerisation erhältlich ist,
- welche zu mindestens 65 Gew.-% auf zumindest einem acrylischen Monomer aus der Gruppe der Verbindungen der folgenden allgemeinen Formel basiert: 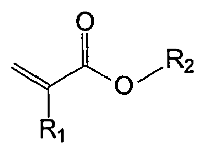
wobei R₁ = H oder CH₃ ist und der Rest R₂ = H oder CH₃ ist oder gewählt wird aus der Gruppe der verzweigten oder unverzweigten, gesättigten Alkylgruppen mit 2 bis 20, bevorzugt mit 4 bis 9 Kohlenstoffatomen,
bei welcher das mittlere Molekulargewicht der Haftklebemasse mindestens 650.000 beträgt,
und welche, sofern sie auf einen Träger aufgetragen ist, eine Vorzugsrichtung besitzt, wobei der in Vorzugsrichtung gemessene Brechungsindex n_{MD} größer ist als der in einer Richtung senkrecht zur Vorzugsrichtung gemessene Brechungsindex n_{CD}, und wobei die Differenz Δn = n_{MD}- n_{CD} mindestens 1x10⁻⁵ beträgt.

Als nicht ausschließliche Beispiele für Alkylgruppe, welche für den Rest R₂ in bevorzugter Weise Anwendung finden können, seien im folgenden genannt Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.

Weiterhin verläuft das Stanzverfahren ausgezeichnet bei Verwendung einer Haftklebemasse, welche zu bis zu 35 Gew.-% auf Comonomere in Form von Vinylverbindungen basiert, insbesondere auf eine oder mehrere Vinylverbindungen gewählt aus der folgenden Gruppe:

Vinylester, Vinylhalogenide, Vinylidenhalogenide, Nitrile ethylenisch ungesättigter Kohlenwasserstoffe.

Im Sinne der Verwendung fallen auch Acrylverbindungen mit funktionellen Gruppen unter die Bezeichnung "Vinylverbindung". Solche funktionelle Gruppen enthaltenden Vinylverbindungen sind Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren; die vorstehende Aufzählung ist nur beispielhaft und nicht abschließend.

Für die Haftklebemassen ist es besonders vorteilhaft, wenn die Zusammensetzung der entsprechenden Monomere derart gewählt wird, dass die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen. Hierfür sollte die Glasübergangstemperatur der Acrylathaftklebemasse zum Beispiel unterhalb 25°C liegen.

Die für die Verwendung herangezogenen Haftklebemassen, insbesondere die vorstehend als vorteilhaft ausgelobten Polyacrylathaftklebemassen, werden bevorzugt durch eine radikalisch initiierte Polymerisation hergestellt. Ein hierfür sehr geeignetes Verfahren zeichnet sich durch die folgenden Schritte aus:
- Polymerisation eines Gemisches enthaltend zumindest ein Monomer auf Vinyl-, Acryl- oder Methacrylbasis oder eine Kombination dieser Monomere, wobei das mittlere Molekulargewicht der entstehenden Polymere oberhalb von 650.000 liegt,
- anschließender Extrusionsbeschichtung der Polymermasse ,
- anschließender Vernetzung der Polymermasse auf dem Träger durch Bestrahlung mit Elektronenstrahlen.

Die Extrusionsbeschichtung erfolgt dabei bevorzugt durch eine Extrusionsdüse. Die verwendeten Extrusionsdüsen können aus einer der drei folgenden Kategorien stammen: T-Düse, Fischschwanz-Düse und Bügel-Düse. Die einzelnen Typen unterscheiden sich durch die Gestalt ihres Fließkanals. Zur Herstellung von orientierten Acrylathaftklebemassen wird besonders bevorzugt mit einer Bügeldüse auf einen Träger beschichtet, und zwar derart, dass durch eine Relativbewegung von Düse zu Träger eine Polymerschicht auf dem Träger entsteht.
Die Zeitdauer zwischen der Beschichtung und der Vernetzung ist in günstiger Weise sehr gering, bevorzugt nicht größer als 10s.
Durch die Ausformung des Acrylathotmelts in der Bügel-Düse sowie den Austritt aus der Düse mit einer bestimmten Filmdicke, durch die Reckung des Haftklebemassenfilms beim Übertrag auf das Trägermaterial auf eine dünnere Filmdicke und durch die anschließende Inline-Vernetzung wird die Orientierung erhalten.

Die freie radikalische Polymerisation kann in Gegenwart eines organischen Lösungsmittels oder in Gegenwart von Wasser oder in Gemischen aus organischen Lösungsmitteln und Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h.
Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wässrigen Medien bzw. Gemischen aus organischen und wässrigen Lösungsmitteln werden zur Polymerisation die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität eingesetzt werden. Als sogenannte Polymerisationsregler können beispielsweise Alkohole und Ether verwendet werden. Das Molekulargewicht der Acrylathaftklebemassen liegt vorteilhaft zwischen 650.000 und 2.000.000 g/mol, mehr bevorzugt zwischen 700.000 und 1.000.000 g/mol.

In einer weiteren Vorgehensweise wird die Polymerisation in Polymerisationsreaktoren durchgeführt, die im allgemeinen mit einem Rührer, mehreren Zulaufgefäßen, Rückflusskühler, Heizung und Kühlung versehen sind und für das Arbeiten unter N₂-Atmosphäre und Überdruck ausgerüstet sind.

Nach der Polymerisation in Lösemittel kann das Polymerisationsmedium unter vermindertem Druck entfernt werden, wobei dieser Vorgang bei erhöhten Temperaturen, beispielsweise im Bereich von 80 bis 150°C durchgeführt wird. Die Polymere können dann in lösemittelfreiem Zustand, insbesondere als Schmelzhaftkleber, eingesetzt werden. In manchen Fällen ist es auch von Vorteil, die erfindungsgemäßen Polymere in Substanz herzustellen.

Zur Herstellung der Acrylathaftklebemassen können die Polymere in üblicher Weise modifiziert werden. Beispielsweise können klebrigmachende Harze, wie Terpen-, Terpenphenol-, C₅-, C₉-, C₅/C₉-Kohlenwasserstoff-, Pinen-, Inden- oder Kolophoniumharze auch in Kombination miteinander zugesetzt werden. Weiterhin können auch Weichmacher, verschiedene Füllstoffe (zum Beispiel Fasern, Ruß, Zinkoxid, Titandioxid, Mikrovollkugeln, Voll- oder Hohlglaskugeln, Kieselsäure, Silikaten, Kreide, blockierungsfreie Isocyanate etc.), Alterungsschutzmittel, Lichtschutzmittel, Ozonschutzmittel, Fettsäuren, Keimbildner, Blähmittel und/oder Beschleuniger als Zusätze verwendet werden. Zusätzlich können Vemetzer und Promotoren zur Vernetzung beigemischt werden. Geeignete Vernetzer für die Elektronenstrahlvernetzung sind beispielsweise bi- oder multifunktionelle Acrylate, bi- oder multifunktionelle Isocyanate oder bi- oder multifunktionelle Epoxide.

Die reinen oder abgemischten Acrylathotmelts werden durch eine Düse mit variabler Schlitzbreite auf das Trägermaterial beschichtet und anschließend auf dem Träger mit Elektronenstrahlen gehärtet. Die Vernetzung erfolgt im Inline-Betrieb unmittelbar nach dem Auftragen der Haftklebemasse auf den Träger.

Die Kombination aus der Vorrichtung und der Trägermaterialbahn bietet eine Vielzahl von Vorteilen, die derartig nicht vorherzusehen gewesen sind.
Es entsteht beim Verspenden der Klebebandabschnitte kein Zeitverlust durch Abziehen einer Abdeckung und weniger Müll. Verschiedene Größen von der Klebebandsabschnitte - in unterschiedlicher Anzahl verklebt - lassen quasi eine "Dosierung" der benötigten Menge Klebeband zu.

Vorzugsweise verwendet die Vorrichtung beidseitig selbstklebende Klebebandabschnitte, die auf der Trägermaterialbahn ohne Lücke angeordnet sind, also zum Beispiel ein 15 mm breites beidseitig selbstklebendes Klebeband, welches alle 15 mm eine Quertrennung aufweist.
Eine Klebestrecke von zum Beispiel 90 mm wird also durch eine Anzahl von 6 Klebebandabschnitten zu 15 mm ersetzt. Andere beliebige Abmessungen sind ebenso denkbar.
Durch die Klebebandabschnitte von 15 mm Länge kann auch ein an sich steifes beidseitig selbstklebendes Klebeband mit Zwischenträger unter Zuhilfenahme der erfindungsgemäßen Vorrichtung in Kurven verklebt werden.

Die Vorrichtung wartet mit einer einstellbaren Anfangs- und Endmarkierung auf, die es dem Verwender ermöglicht, eine beliebige Anzahl von Klebebandabschnitte auf dem Untergrund zu positionieren.

Die Anordnung aller Funktionselemente erfolgt in der Weise, dass der Spendevorgang nicht nur in der üblichen ziehenden Weise, sondern vorzugsweise durch schiebende Bewegung erfolgen kann.

Zusammenfassend bietet das erfindungsgemäße Verfahren die folgenden Vorteile.
Das Verfahren dient der Fixierung von Flachbandkabeln (FFC-Folienkabelsystemen) auf insbesondere PKW-Oberflächen, und zwar derart, dass das Kabelsystem in einem einzigen Arbeitsschritt mit hoher Lagepräzision auf das PKW-Teil aufgebracht werden kann.

Dazu wird über eine spezielle Pistole, das auch an einem Roboter aufgesetzt werden kann, ein mit beidseitig klebenden Klebebandabschnitten versehenes Band direkt auf den Untergrund, zum Beispiel dem Dachhimmel appliziert, wobei die Pistole selbstständig das Band aufrollt.
Das Klebeband gestattet es, eng aneinanderliegende Klebestücke so auf eine Rolle zu positionieren, dass beim Abrollen über einen speziellen Applikator, diese selbstständig auf die Oberfläche (Haftgrund) des PKW-Teiles überspringen/haften bleiben. Dafür ist das Trennpapier in einer speziellen auf beiden Seiten unterschiedlich stark abweisenden Schicht ausgestattet, die ein kontinuierliches zügiges Applizieren/Übertragen der Abschnitte gestattet. Die Pistole (Vorrichtung) gestattet ein flexibles Applizieren, das heißt, es kann am Ort der Sollauftragung angesetzt werden und an der Stelle, wo die Applikation beendet werden soll, leicht angehoben werden. Das Verfahren arbeitet ohne Messer oder Klinge, so dass bei sich eine Bedienperson der Arbeit keine Verletzung zufügen kann. Dieses Verfahren ist auch vorteilhaft, weil bei der Applikation kein Messer oder eine Klinge erforderlich sind, die das Folienkabel beim Schneiden gegebenenfalls verletzen oder durch Einkerben unbrauchbar machen, und somit aufwändige elektrische Funktionsausfälle unterbleiben.

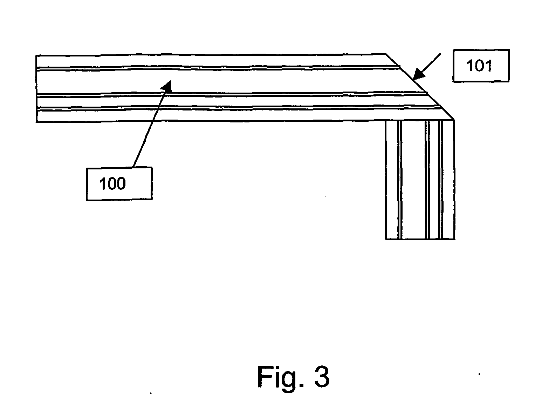

Parallel hierzu wird ein Flachbandkabel beziehungsweise ein System aus Flachbandkabeln nach Art eines Kabelbaums in eine Haltevorrichtung eingelegt, die das System durch justierbares Einklemmen über einen kurzen Zeitraum selbstständig trägt. Das Gitter trägt speziell vorbereitete Biegezonen, an denen das FFC lagerichtig Kurven/Knickstellen bilden kann.
Das Haltegitter hat dieselbe Geometrie wie die Position des Folienkabels auf dem PKW Formteil, das heißt, es soll später das Folienkabel auf einer Länge beispielsweise von 80 cm geradeaus laufen und anschließend um 90° geknickt noch weitere 40 cm geradeaus liegend verklebt sein auf dem PKW Formteil, so hat das Montage-Gitter auch diese (spiegelbildliche) Geometrie (siehe Figur 3).
Das Montagegitter ist so aufgebaut, dass es alle Richtungsänderungen aufnehmen kann. Eine Richtungsänderung kann bei FFC-Folienkabel nur durch Falten oder Knicken realisiert werden. Die Haltevorrichtung gestattet ebenfalls die Aufnahme solche Kurvenzonen, die geeignet sind, das Folienkabel bei der Montage zu falten oder zu knicken. Der besondere Vorteil dieser Haltevorrichtung besteht daraus, dass bei der Montage die korrekte Lage mit allen Kurven (Winkeln) lagerichtig vorgelegt werden kann, noch bevor das FFC Foliensystem in seine endgültige Verklebungsstelle auf dem PKW Teil eingeschwenkt wird.

Die Halterung wird so auf das Dachhimmelteil eingeschwenkt, dass das Flachbandkabel lagerichtig direkt auf dem Dachhimmel liegt. Die Halterung ist vorzugsweise mit einer federgesteuerten Pressvorrichtung ausgestattet, welches den erforderlichen Anpressdruck ausübt, damit das Flachbandkabel in einer Hubbewegung fest mit dem Dachhimmel verbunden wird.

Dadurch werden folgende Nachteile vermieden:
- Kein umständliches Vorapplizieren von Klebebändern auf Flachbandkabel
- Kein zeitaufwendiges Entfemen von Trennpapier von den Klebebändern bevor das Flachbandkabel auf dem Dachhimmel montiert werden kann.
- Kein zeitaufwendiges Anpressen des Flachbandkabels auf die darunter befindliche Oberfläche, vor allem wenn diese rau und saugfähig ist. (Einziehen des Klebers in Oberfläche)
- Kein Nachführen des Flachbandkabels auf dem Dachhimmel bei der Montage, keine Fehlpositionierung, welches oftmals ein Nachkleben/Korrekturkleben mit sich bringt
- Kein Nachkorrigieren der Verklebung, das heißt. möglicherweise erneutes Entfernen der Verklebung, weil nicht auf Millimeter -genau lagerichtig positioniert wurde

Folgende Vorteile sind zu erkennen:
- Selbstständiges Einpressen des Flachbandkabels in die Oberfläche des Dachhimmels
- Automatisierbar, roboterfähig

Anhand der nachfolgend beschriebenen Figuren werden besonders vorteilhafte Ausführungsformen der Vorrichtung näher erläutert, ohne damit die Erfindung unnötig einschränken zu wollen. Es zeigen
- Figur 1: die Vorrichtung mit einer Rolle der Trägermaterialbahn in einer besonders vorteilhaft gestalten Ausführungsform,
- Figur 2: eine Rolle der Trägermaterialbahn mit Klebebandabschnitten,
- Figur 3: das Haltegitter und
- Figur 4: die Montagevorrichtung mit einer beweglichen Basisplatte.

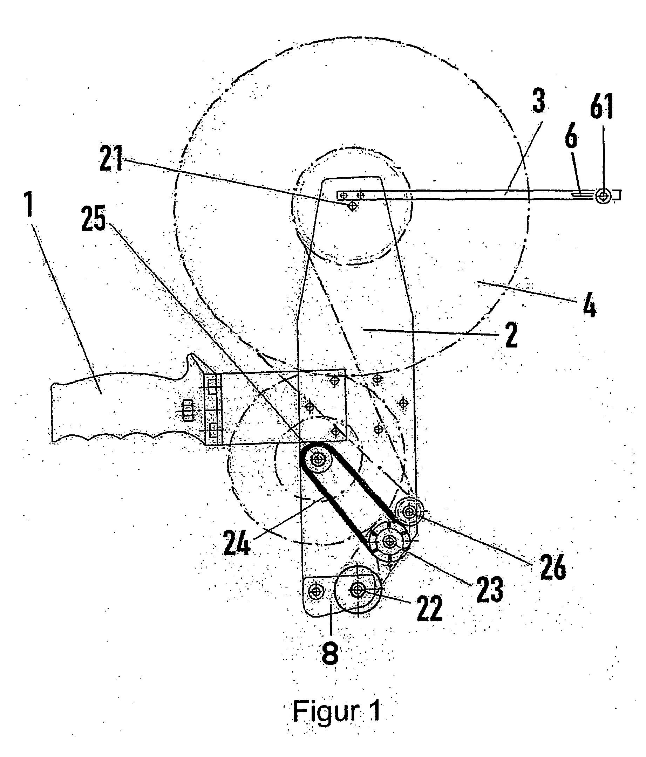

In der Figur 1 ist die Vorrichtung zum Abrollen von einer auf einer Rolle 4 befindlichen Trägermaterialbahn 41 mit beidseitig klebend ausgerüsteten Klebebandabschnitten 42 gezeigt.
Die Vorrichtung setzt sich aus mehreren einzelnen Bauteilen zusammen.
Zentrales Bauteil ist die Halteplatte 2, die zur Aufnahme aller weiteren Bauteile dient, so einem Griffstück 1, das an der Halteplatte 2 angeschraubt ist.
Durch einfaches Versetzen des Handgriffes 1 ist eine ziehende und auch insbesondere eine schiebende Bewegung der Vorrichtung während des Spendevorganges erlaubt, Bevorzugt wird die Vorrichtung geschoben, weil eine höhere Anpresskraft, die für druckempfindliche Selbstklebemassen von Vorteil ist, ergonomisch bei schiebender Bewegung wesentlich leichter aufzubringen ist.

Auf der Halteplatte 2 ist sodann eine drehbar gelagerte Aufnahme 21 für die Rolle 4 Trägermaterialbahn 41 vorgesehen.

Weiterhin ist eine auf der Halteplatte 2 drehbar gelagerte Andruckrolle 22 vorhanden, die während des Spendevorganges die Trägermaterialbahn 41 mit den Klebebandabschnitten 42 mit dem Untergrund in Kontakt bringt und über 21 für die Rolle 4 derart geführt wird, dass die Klebebandabschnitte 42 während des Spendevorganges von der Trägermaterialbahn 41 auf den Untergrund verspendet werden.
Die Andruckrolle 22 ist in ihrem Material und Durchmesser so beschaffen, dass einerseits ein ausreichender Andruck für die Verklebung der selbstklebend ausgerüsteten Klebebandabschnitte 42 gewährleistet ist und andererseits die Trägermaterialbahn 41 von den beidseitig selbstklebenden Klebebandabschnitten 42 beim Spenden problemlos entfernt werden kann. Dann ist diese speziell auf die Eigenschaften der beidseitig selbstklebenden Klebebandabschnitte 42 auf der Trägermaterialbahn 41 abgestimmt.

Über eine auf der Halteplatte 2 drehbar gelagerten Antriebsrolle 23 wird die Trägermaterialbahn 41 mit den Klebebandabschnitten 42 derart geführt, dass die Antriebsrolle 23 synchron zur Geschwindigkeit der Trägermaterialbahn 41 rotiert.

Die Antriebsrolle 23 ist zwischen der Aufnahme 21 für die Rolle 4 Trägermaterialbahn 41 und der Andruckrolle 22 angeordnet.

Damit die Trägermaterialbahn 41 einen großen Umschlingungswinkel um die Antriebsrolle aufweist, ist eine Führungsrolle 26 zwischen der Aufnahme 21 für die Rolle 4 Trägermaterialbahn 41 und der Antriebsrolle 23 angeordnet, die ihrerseits von der Trägermaterialbahn 41 umgeben ist.

Schließlich befindet sich auf der Halteplatte 2 eine drehbar gelagerte Aufnahmerolle 25, die die Trägermaterialbahn 41 nach dem Verspenden der Klebebandabschnitte 42 aufnimmt und die insbesondere über einen Riemen 24 durch die Bewegung der Antriebsrolle 23 in Rotation versetzt wird.

Auf der Haltevorrichtung 2 ist auf einer fixierbaren Achse 3 eine einstellbare Positionierhilfe 6 vorgesehen, und zwar in Form einer festschraubbaren, drehbar gelagerten Welle 61, über die die Trägermaterialbahn 41 von der Aufnahme 21 für die Rolle 4 Trägermaterialbahn 41 in Richtung Antriebsrolle 23 geführt wird.

Die Andruckrolle 22 ist mit der einen Seite auf der Halteplatte 2 fixiert und trägt auf der anderen Seite eine Gegenplatte 8. Die Gegenplatte 8 und die Halteplatte 2 sind bei der Vorrichtung 100, die während des Spendevorganges geschoben wird, in Richtung des Handgriffes 1 verlängert ausgeführt. Die Gegenplatte 8 und die Halteplatte 2 sind in ihrer Form mit der Andruckrolle 22 und dem Hebelarm des Handgriff 1 derart abgestimmt, dass am Ende des Spendevorgang die gesamte Vorrichtung vom Verwender um den sich aus dieser Geometrie ergebenden Drehpunkt leicht gekippt werden kann. Durch diese Drehbewegung gelingt es in Verbindung mit der Positionierhilfe 6 immer, einerseits den letzten Klebebandabschnitt 42 noch sicher zu spenden, das heißt von der Trägermaterialbahn 41 auf den Untergrund zu übertragen, andererseits wird der folgende, erst später zu verklebende Klebebandabschnitt 42 noch sicher auf der Trägermaterialbahn 41 festgehalten.

Die gesamte Vorrichtung ist so abgestimmt, dass sowohl bei einer leeren als auch bei einer vollen Aufnahmerolle 25 die Positioniergenauigkeit der beidseitig selbstklebenden Klebebandabschnitte 42 nicht negativ beeinflusst wird. Dies betriff insbesondere das Übersetzungsverhältnis des Riemenantriebs zwischen den Rollen 23 und 25.

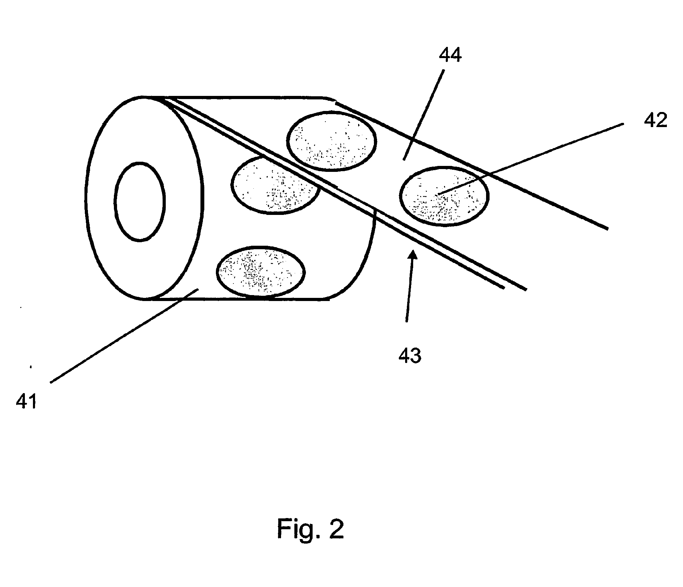

Die Trägermaterialbahn 41 ist gemäß Figur 2 zu einer Rolle in Form einer archimedischen Spirale aufgewickelt. Auf der Trägermaterialbahn 41 sind die einzelnen Klebebandabschnitte 42, hier in Form von Kreisen, in regelmäßigen Abständen angeordnet.
Die Trägermaterialbahn 41 weist unterschiedliche antiadhäsive Beschichtungen 43, 44 auf. Die sich auf der unteren Seite der Trägermaterialbahn 41 befindliche antiadhäsive Beschichtung 43 weist einen höheren Abweisungsgrad auf als die antiadhäsive Beschichtung 44, die sich auf der oberen Seite der Trägermaterialbahn 41 befindet.

Gemäß Figur 3 hat das Haltegitter hat dieselbe Geometrie wie die Position des Folienkabels auf dem PKW Formteil, das heißt, es soll später das Folienkabel auf einer Länge beispielsweise von 80 cm geradeaus laufen und anschließend um 90° geknickt (Knickstelle 101) noch weitere 40 cm geradeaus liegend verklebt sein auf dem PKW Formteil, so hat das Montage-Gitter auch diese (spiegelbildliche) Geometrie (siehe Figur 3).

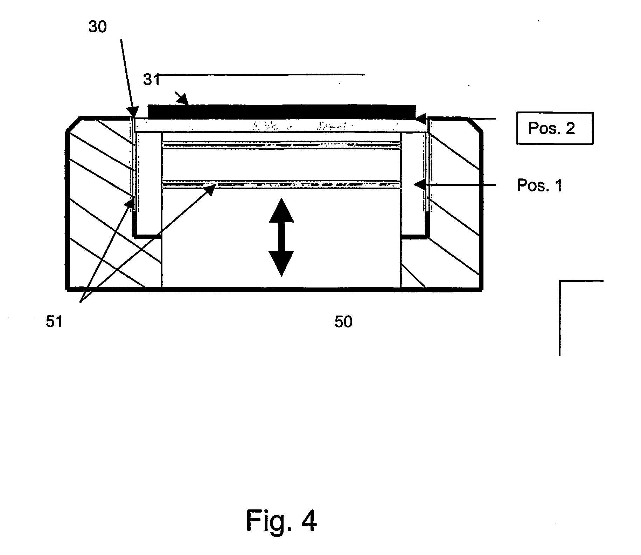

Die Figur 4 zeigt die Montagevorrichtung mit einer beweglichen Basisplatte 50, die ein Beladen des Folienkabelsatzes 30 in Position 1 gestattet (Position Basisplatte 50 unten), während diese in die Verklebungsposition über dem PKW-Formteil einschwenkt, gelangt die Basisplatte 50 in die Position 2 (Position Basisplatte 50 oben), die ein Anpressen ermöglicht. Dabei ist die Klebkraft des Klebebandes 31 so eingestellt, dass der Folienkabelsatz 30 nach erstmaligen Kontakt in seiner Verklebungsposition selbstständig aus seiner Halterung freikommt., da die Haftung auf Untergrund die Haltekraft in der Montagevorrichtung übersteigt.

## Patentansprüche

1. Verfahren zum Verkleben von Flachbandkabeln auf Untergründen wie die Innenraum-Dekorteile eines PKWs, insbesondere Dachhimmel, Türseitenteil, Kofferraumdeckel, **dadurch gekennzeichnet, dass**
das Flachbandkabel in eine Halterung eingelegt wird, mit der das Flachbandkabel vorübergehend fixiert ist,
auf die Flachbandkabel beidseitig klebend ausgerüstete Klebebandabschnitte aufgebracht werden,
zwischen dem mit den beidseitig klebend ausgerüsteten Klebebandabschnitten versehenen Flachbandkabel sowie dem Untergrund eine Relativbewegung aufeinander zu stattfindet,
die beidseitig klebend ausgerüsteten Klebebandabschnitte das Flachbandkabel mit dem Untergrund verkleben, so dass sich bei einer Entfernung der Halterung vom Untergrund das Flachbandkabel aus der Halterung löst.

2. Verfahren nach Anspruch 1, **dadurch gekennzeichnet, dass**
das Verkleben der beidseitig klebend ausgerüsteten Klebebandabschnitte auf dem Flachbandkabel mittels einer Vorrichtung zum Abrollen von einer auf einer Rolle (4) befindlichen Trägermaterialbahn (41) mit den beidseitig klebend ausgerüsteten Klebebandabschnitten (42) erfolgt, bestehend aus
einem Griffstück (1), das an einer Halteplatte (2) angebracht ist,
einer auf der Halteplatte (2) drehbar gelagerten Aufnahme (21) für die Rolle Trägermaterialbahn (4, 41),
einer auf der Halteplatte (2) drehbar gelagerten Andruckrolle (22), die während des Spendevorganges die Trägermaterialbahn (41) mit den Klebebandabschnitten (42) mit dem Untergrund in Kontakt bringt und über die die Trägermaterialbahn (41) mit den Klebebandabschnitten (42) von der Aufnahme (21) für die Rolle (4) derart geführt wird, dass die Klebebandabschnitte (42) während des Spendevorganges von der Trägermaterialbahn (41) auf den Untergrund verspendet werden,
einer auf der Halteplatte (2) drehbar gelagerten Antriebsrolle (23), über die die Trägermaterialbahn (41) mit den Klebebandabschnitten (42) derart geführt wird, dass die Antriebsrolle (23) synchron zur Geschwindigkeit der Trägermaterialbahn (41) rotiert,
einer auf der Halteplatte (2) drehbar gelagerten Aufnahmerolle (25), die die Trägermaterialbahn (41) nach dem Verspenden der Klebebandabschnitte (42) aufnimmt und die insbesondere über einen Riemen (24) durch die Bewegung der Antriebsrolle (23) in Rotation versetzt wird.

3. Verfahren nach den Ansprüchen 1 oder 2, **dadurch gekennzeichnet, dass**
die Antriebsrolle (23) zwischen der Aufnahme (21) für die Rolle Trägermaterialbahn (4, 41) und der Andruckrolle (22) angeordnet ist und/oder
eine Führungsrolle (26) zwischen der Aufnahme (21) für die Rolle Trägermaterialbahn (4, 41) und der Antriebsrolle (23) angeordnet ist.

4. Verfahren nach zumindest einem der Ansprüche 1 bis 3, **dadurch gekennzeichnet, dass**
sich auf einer auf dem Griffstück (1) fixierbare Achse (3) eine einstellbare Positionierhilfe (6) befindet, insbesondere in Form einer festschraubbaren, drehbar gelagerten Welle (61), über die die Trägermaterialbahn(41)von der Aufnahme (21) für die Rolle Trägermaterialbahn (4, 41) in Richtung Antriebsrolle (23) geführt wird.

5. Verfahren nach zumindest einem der Ansprüche 1 bis 4, **dadurch gekennzeichnet, dass**
das Griffstück (1) sowie alle anderen Bauteile spiegelverkehrt auf der Halteplatte (2) montiert werden können.

6. Verfahren nach zumindest einem der vorherigen Ansprüche, **dadurch gekennzeichnet, dass**
in der Aufnahme (21) für die Rolle Trägermaterialbahn (4, 41) eine einstellbare Bremse, insbesondere Friktionsbremse vorhanden ist.

7. Verfahren nach zumindest einem der Ansprüche 2 bis 6, **dadurch gekennzeichnet, dass**
die Andruckrolle (22) mit der einen Seite auf der Halteplatte (2) fixiert und auf der anderen Seite eine Gegenplatte (8) trägt, wobei die Gegenplatte (8) und die Halteplatte (2) bei der Vorrichtung (100), die während des Spendevorganges geschoben wird, in Richtung des Handgriffes (1) verlängert ausgeführt sind.

8. Verfahren nach zumindest einem der vorherigen Ansprüche, **dadurch gekennzeichnet, dass**
die Vorrichtung von einem Roboter geführt wird, so dass Klebebandabschnitte an exakt vorgegebenen Stellen auf dem Flachbandkabel aufgebracht werden.

9. Verfahren nach zumindest einem der vorherigen Ansprüche, **dadurch gekennzeichnet, dass**
die Halterung in Form einer Rinne ausgeführt ist, deren Seitenwände die Kanten des Flachbandkabels klammerartig umgreifen, so dass das Flachbandkabel mechanisch in der Rinne fixiert ist.

10. Verfahren nach Anspruch 9, **dadurch gekennzeichnet, dass**
die Höhe der Seitenwände der Rinne in etwa der Summe aus der Dicke des Flachbandkabels und der Klebebandabschnitte entspricht.

11. Verfahren nach Anspruch 9 oder 10, **dadurch gekennzeichnet, dass**
die Rinne mit einer Klebeband-Beschichtung ausgerüstet ist, vorzugsweise ein doppelseitiges Klebeband, ohne dass sich dabei das Folienkabel in Längsrichtung in der Rinne bewegen kann.

## Claims

1. Method of bonding flat ribbon cables adhesively to substrates such as the interior decorative components of a passenger car, especially roof lining, door side part or boot lid, **characterized in that** the flat ribbon cable is inserted into a mount to which the flat ribbon cable is temporarily fixed, double-sided adhesive tape sections are applied to the flat ribbon cables,
a relative movement takes place between the flat ribbon cable provided with the double-sided adhesive tape sections and the substrate with respect to one another,
the double-sided adhesive tape sections adhesively bond the flat ribbon cable to the substrate, so that when the mount is removed from the substrate the flat ribbon cable is detached from the mount.

2. Method according to Claim 1, **characterized in that** the adhesive bonding of the double-sided adhesive tape sections to the flat ribbon cable takes place by means of an apparatus for unrolling a backing material web (41), present on a roll (4), with the double-sided adhesive tape sections (42), comprising
a handle (1) fitted to a base plate (2),
a receiver (21) mounted rotatably on the base plate (2) and intended for the roll of backing material web (4, 41),
a pressure roller (22) which is mounted rotatably on the base plate (2) and which during the dispensing operation brings the backing material web (41) with the adhesive tape sections (42) into contact with the substrate and, via which the backing material web (41) with the adhesive tape sections (42) is guided from the receiver (21) for the roll (4), in such a way that the adhesive tape sections (42) are dispensed onto the substrate from the backing material web (41) during the dispensing operation,
a drive roller (23) which is mounted rotatably on the base plate (2) and via which the backing material web (41) with the adhesive tape sections (42) is guided in such a way that the drive roller (23) rotates synchronously with respect to the speed of the backing material web (41),
a receiver roller (25) which is mounted rotatably on the base plate (2) and which receives the backing material web (41) after the adhesive tape sections (42) have been dispensed, and which in particular is set in rotation via a belt (24) by the movement of the drive roller (23).

3. Method according to Claim 1 or 2, **characterized in that**
the drive roller (23) is disposed between the receiver (21) for the roll of backing material web (4, 41) and the pressure roller (22) and/or
a guide roller (26) is disposed between the receiver (21) for the roll of backing material web (4, 41) and the drive roller (23).

4. Method according to at least one of Claims 1 to 3,
**characterized in that**
on an axle (3) which can be fixed on the handle (1) there is an adjustable positioning aid (6), in particular in the form of a rotatably mounted shaft (61) which can be fixed by screwing, via which the backing material web (41) is guided from the receiver (21) for the roll of backing material web (4, 41) in the direction of drive roller (23).

5. Method according to at least one of Claims 1 to 4,
**characterized in that**
the handle (1) and all other components can be mounted in mirror-image form on the base plate (2).

6. Method according to at least one of the preceding claims, **characterized in that**
in the receiver (21) for the roll of backing material web (4, 41) there is an adjustable brake, in particular a friction brake.

7. Method according to at least one of Claims 2 to 6,
**characterized in that**
one side of the pressure roller (22) is fixed on the base plate (2) and the other side carries a counterplate (8), the counterplate (8) and the base plate (2) being of prolonged design in the direction of the handle (1) in the case of the apparatus (100) which is pushed during the dispensing operation,

8. Method according to at least one of the preceding claims, **characterized in that**
the apparatus is guided by a robot, so that adhesive tape sections are applied to the flat ribbon cable at precisely predetermined locations.

9. Method according to at least one of the preceding claims, **characterized in that**
the mount is designed in the form of a channel whose side walls enclose the edges of the flat ribbon cable in the manner of a bracket, so that the flat ribbon cable is fixed mechanically in the channel.

10. Method according to Claim 9, **characterized in that**
the height of the side walls of the channel corresponds approximately to the sum of the thickness of the flat ribbon cable and of the adhesive tape sections.

11. Method according to Claim 9 or 10, **characterized in that**
the channel is equipped with an adhesive tape coating, preferably a double-sided adhesive tape, without the laminated cable being able to move in the lengthwise direction in the channel.

## Revendications

1. Procédé de collage de câbles en ruban plat sur des bases telles que des pièces de décoration de l'habitacle d'un véhicule automobile, en particulier son plafond, ses contre-portes et son hayon arrière, **caractérisé en ce que** :
le câble en ruban plat est placé dans un support auquel le câble en ruban plat est fixé provisoirement,
des morceaux de ruban adhésif double face sont appliqués sur le câble en ruban plat,
entre le câble en ruban plat doté des morceaux de ruban adhésif double face et la base, on opère un déplacement relatif et
les morceaux de ruban adhésif double face collent le câble en ruban plat sur la base, de telle sorte que, lorsque l'on éloigne le support de la base, le câble en ruban plat se libère du support.

2. Procédé selon la revendication 1, **caractérisé en ce que** le collage des morceaux de ruban adhésif double face sur le câble en ruban plat s'effectue au moyen d'un dispositif de déroulement d'une bande (41) de matériau de support située sur un rouleau (4) et dotée des morceaux (42) de ruban adhésif double face et constitué de :
une poignée (1) installée sur une plaque de maintien (2),
un logement (21) du rouleau de bande de matériau de support (4, 41) monté à rotation sur la plaque de maintien (2),
un rouleau de poussée (22) monté à rotation sur la plaque de support (2), qui amène la bande (41) de matériau de support dotée des morceaux (42) de ruban adhésif en contact avec la base pendant l'opération de distribution et par lequel la bande (41) de matériau de support dotée des morceaux (42) de ruban adhésif est guidée par le logement (21) du rouleau (4) de telle sorte que les morceaux (42) de ruban adhésif soient distribués sur la base pendant l'opération de distribution de la bande (41) de matériau de support,
un rouleau d'entraînement (23) monté à rotation sur la plaque de maintien (2) et par lequel la bande (41) de matériau de support dotée des morceaux (42) de ruban adhésif est guidée de telle sorte que le rouleau d'entraînement (23) tourne de manière synchronisée par rapport à la vitesse de la bande (41) de matériau de support,
un rouleau de réception (25) monté à rotation sur la plaque de maintien (2), qui reprend la bande (41) de matériau de support après la distribution des morceaux (42) de ruban adhésif et qui est mise en rotation par le déplacement du rouleau d'entraînement (23), en particulier par l'intermédiaire d'une courroie (24).

3. Procédé selon la revendication 1 ou 2, **caractérisé en ce que** le rouleau d'entraînement (23) est disposé entre le logement (21) du rouleau de bande de matériau de support (4, 41) et le rouleau de poussée (22) et/ou
**en ce qu'**un rouleau de guidage (26) est disposé entre le logement (21) du rouleau de bande de matériau de support (4, 41) et le rouleau d'entraînement (23).

4. Procédé selon au moins l'une quelconque des revendications 1 à 3, **caractérisé en ce que** sur un axe (3) qui peut être fixé sur la poignée (1) est situé un accessoire de positionnement (6) réglable qui présente en particulier la forme d'un arbre (61) monté à rotation et apte à être immobilisé par vissage et par lequel la bande (41) de matériau de support est guidée du logement (21) du rouleau de bande de matériau de support (4, 41) en direction du rouleau d'entraînement (23).

5. Procédé selon au moins l'une quelconque des revendications 1 à 4, **caractérisé en ce que** la poignée (1) ainsi que tous les autres composants peuvent être montés en des positions symétriques sur la plaque de maintien (2).

6. Procédé selon au moins l'une quelconque des revendications précédentes, **caractérisé en ce qu'**un frein réglable et en particulier un frein à frottement est prévu dans le logement (21) du rouleau de bande de matériau de support (4, 41).

7. Procédé selon au moins l'une quelconque des revendications 2 à 6, **caractérisé en ce que** le rouleau de poussée (22) est fixé par un côté sur la plaque de maintien (2) et porte sur son autre côté une contre-plaque (8), la contre-plaque (8) et la plaque de maintien (2) étant prolongées en direction de la poignée (1) lorsque le dispositif (100) est poussé pendant l'opération de distribution.

8. Procédé selon au moins l'une quelconque des revendications précédentes, **caractérisé en ce que** le dispositif est guidé par un robot, de telle sorte que les morceaux de ruban adhésif soient appliqués sur le câble en ruban plat en des emplacements prédéterminés avec exactitude.

9. Procédé selon au moins l'une quelconque des revendications précédentes, **caractérisé en ce que** le support présente la forme d'une rainure dont les parois latérales chevauchent en peigne les bords du câble en ruban plat, de telle sorte que le câble en ruban plat soit fixé mécaniquement dans la rainure.

10. Procédé selon la revendication 9, **caractérisé en ce que** la hauteur des parois latérales de la rainure correspond sensiblement à la somme de l'épaisseur du câble en ruban plat et de celle des morceaux de ruban adhésif.

11. Procédé selon la revendication 9 ou 10, **caractérisé en ce que** la rainure est recouverte d'un ruban adhésif, de préférence un ruban adhésif double face, pour que le câble en film ne puisse se déplacer dans le sens de sa longueur dans la rainure.
